# EUROPEAN PATENT APPLICATION

(11) **EP 2 278 433 A2**
(43) Date of publication of application: **26.01.2011**
(21) Application number: 10168577.4
(22) Date of filing: 06.07.2010
(51) Int. Cl.: G06F 1/20

(54) **Ventilation port for apparatus having electronics**

(30) Priority: 07.07.2009 US 498671
(71) Applicant: General Electric Company, Schenectady, NY 12345 (US)
(72) Inventor: Kankkunen, Jukka Ismo, 01730 Vantaa (FI); Frondelius, Kimmo, 00270 Helsinki (FI)
(74) Representative: Illingworth-Law, William Illingworth

(57) **Abstract**

A ventilation port for an apparatus having electronics producing heat when energized is disclosed herein. The ventilation port includes a first frame (5) having several ventilation openings (6) separated by brackets (7) and which ventilation openings allow an airflow for cooling the electronics. The ventilation port also includes a second frame (10) having several ventilation openings (13) separated by brackets (14) and which ventilation openings allow the airflow for cooling the electronics and which second frame and first frame are arranged consecutively leaving a distance therebetween and which ventilation openings (6) of the first frame (5) and the brackets (14) of the second frame (10) are overlapping.

## Description

### BACKGROUND OF THE INVENTION

This disclosure relates generally to a ventilation port for an apparatus having electronics producing heat when energized.

Cooling of a monitor has an influence on its service life, surface temperature, functionality, electric and fire safety. This is a reason to require proper cooling system for the monitor. Usually cooling of monitors is a combination of a ventilation and a heat conduction. An ideal cooling would consist of the heat conduction only without ventilation holes in a monitoring housing, but this is difficult to achieve, because electronics create too much heat especially when a monitor is used in a room temperature being sometimes even 40 degrees centigrade above freezing point making cooling necessary. Very often the heat conduction is not sufficient in which case the ventilation is also needed. Therefore monitors include besides ventilation openings for room air in lower part of the monitor but also ventilation openings for exhaust air in an upper part of the monitor. The ventilation can be natural or pressurized by means of a fan.

One specific environment where monitors are used is a hospital, where needs for patient monitors differ from conventional monitors. Patient monitors are used in hospitals to measure patient vital functions. Patient monitors are situated near the patient like other devices- and accessories. This environment of use requires much for the patient monitor. One of the requirements is that the patient monitor must be silent and at the same time it must be drip-proof. These two requirements together influence much of the patient monitor construction. Leaving the fan out of the construction does the silent patient monitor design. Adding ventilation openings so that there are ventilation openings on the bottom- and top of the patient monitor mainly does adequate cooling without fan.

The ventilation openings must be designed so that the drip-proof requirements fulfill in all specified positions and at the same time the cooling must be adequate. This is not a big problem in case fans are used, because the ventilation openings can be placed freely avoiding water drops, but fans cause also noise, require energy, can be damaged, requires a room inside the monitor and require a filter, which needs to be cleaned or replaced from time to time. So it is desirable to leave fans out of the monitor, which on the other hand makes the design more complicated, because then the ventilation must happen naturally without fans meaning that ventilation holes are typically placed in the upper part of the monitor which is exposed to water drops.

Common and traditional way to design the ventilation openings is to put water drip gill in front of the opening. Usually this is done so that the drips are situated in the horizontal direction and rotated so that the liquid slides outside. These traditional designs are not splash proof. Splash water or liquid goes inside the patient monitor if there is a surface to splash. Also it is possible to change an angle of the horizontal openings and a density of these openings to improve a splash protection, but this solution is not suitable without a fan. One other traditional design is to put very small openings side by side and trust that the water- or liquid surface tension is so high that it does not go inside. Above-mentioned design is not adequate because of the small openings split the dropping water or -liquid into even smaller drops of liquid going inside like a spray. These traditional designs are often very difficult to clean as a result from fixed design. The traditional design also blocks the ventilation too much.

### BRIEF DESCRIPTION OF THE INVENTION

The above-mentioned shortcomings, disadvantages and problems are addressed herein which will be understood by reading and understanding the following specification.

In an embodiment, a ventilation port for an apparatus having electronics producing heat when energized includes a first frame having several ventilation openings separated by brackets and which ventilation openings are configured to allow an airflow for cooling said electronics. The ventilation port for the apparatus also includes a second frame having several ventilation openings separated by brackets and which ventilation openings are configured to allow the airflow for cooling the electronics and which second frame and first frame are arranged consecutively leaving a distance therebetween and which ventilation openings of the first frame and the brackets of the second frame are overlapping.

In another embodiment, a ventilation port for an apparatus having electronics producing heat when energized includes a first frame having several longitudinal ventilation openings separated by brackets and which ventilation openings are configured to allow an airflow for cooling the electronics. The ventilation port for an apparatus also includes a second frame having several longitudinal ventilation openings separated by brackets equipped with a liquid guide for keeping a liquid away from the ventilation openings edging the bracket and guiding the liquid down away from the ventilation openings and which ventilation openings are configured to allow the airflow for cooling the electronics and which second frame and first frame are arranged consecutively leaving a distance therebetween so that the airflow is configured first to flow through the ventilation openings of the second frame and after that through the ventilation openings of the first frame and which ventilation openings of the first frame and the brackets of the second frame are overlapping..

In yet another embodiment a ventilation port for an apparatus having electronics producing heat when energized includes a first frame having several longitudinal ventilation openings separated by brackets and which ventilation openings are configured to allow an airflow for cooling the electronics. The ventilation port for an apparatus also includes a second frame having several longitudinal ventilation openings separated by brackets equipped with a liquid guide for keeping liquid away from the ventilation openings edging the bracket and possibly guiding the liquid down away from the ventilation openings and which ventilation openings are configured to allow the airflow for cooling the electronics and which second frame and first frame are arranged consecutively leaving a distance therebetween constituting an intermediate space for an exhaust air and which intermediate space is connected to a draining channel guiding possibly collected liquid outside the apparatus and which ventilation openings of the first frame and the brackets of the second frame are overlapping.

Various other features, objects, and advantages of the invention will be made apparent to those skilled in art from the accompanying drawings and detailed description thereof.

### BRIEF DESCRIPTION OF THE DRAWINGS

Figure 1 is a schematic perspective view of a rear of an apparatus having a ventilation port in accordance with an embodiment;

Figure 2 is perpendicular view of the rear of the apparatus having its ventilation openings of the ventilation port in accordance with an embodiment;

Figure 3 is a perspective view of the ventilation port structure with partial section in accordance with an embodiment;

Figure 4 is a schematic perspective view of a cross section of the apparatus of Figure 1 showing the ventilation port structure in accordance with an embodiment;

Figure 5 is a horizontal section of the ventilation port structure shown in Figure 2 in accordance with an embodiment; and

Figure 6 is an exploded view of the ventilation port shown in Figure 2 in accordance with an embodiment.

### DETAILED DESCRIPTION OF THE INVENTION

Specific embodiments are explained in the following detailed description making a reference to accompanying drawings. These detailed embodiments can naturally be modified and should not limit the scope of the invention as set forth in the claims.

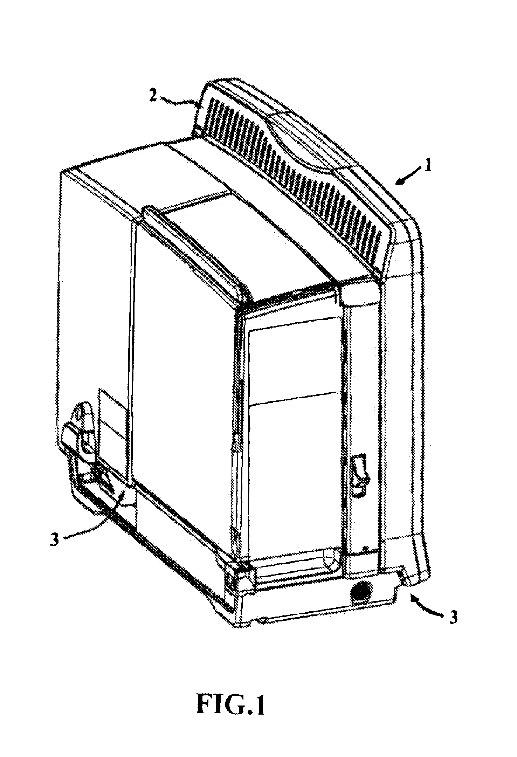

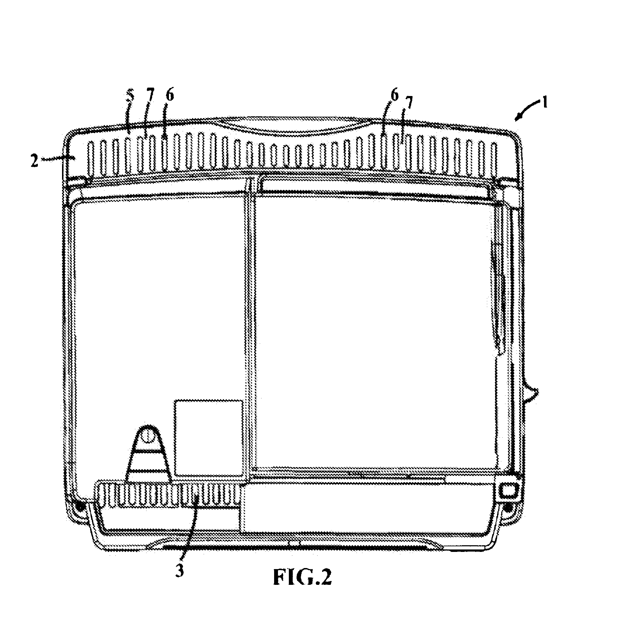

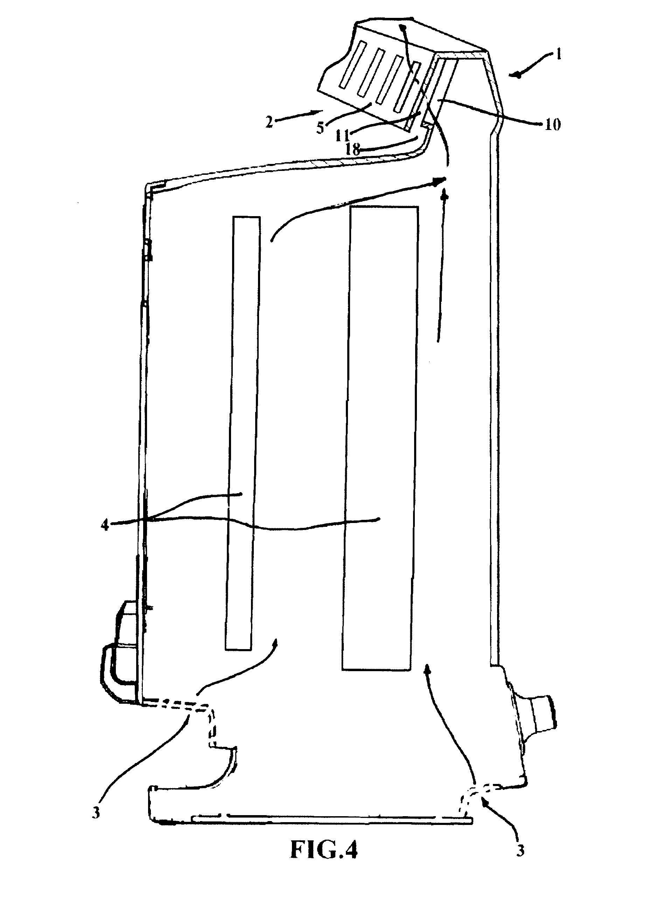

Figure 1 shows a schematic perspective view of an apparatus 1, such as a patient monitor, equipped with a ventilation port 2 for an exhaust air removing air heated by electronics of the apparatus 1 when energized. The ventilation port 2 for an exhaust air is situated in an upper part of the apparatus to make especially a natural circulation of an air inside the apparatus 1 as effective as possible preferably without any fan. The air from an environment or room is flowing inside the apparatus 1 from an entrance port 3 as shown in Figure 1 and 2, which is usually in a lower part of the apparatus 1, towards the ventilation port 2 for the exhaust air cooling electronics 4 as shown in Figure 4 while removing the heated air.

The ventilation port 2 having a first frame 5 is shown in Figure 2 when viewing perpendicular to a rear of the apparatus 1. The first frame 5 is equipped with several parallel ventilation openings 6 allowing the air heated by the electronics 4 to flow out through these openings from the apparatus 1 to the environment or room where the apparatus 1 locates. Between longitudinal ventilation openings 6, which are advantageously vertical or may be longitudinally inclined compared to vertical position from zero to 90 degrees, more specifically from zero to 45 degrees, even more specifically from zero to 30 degrees, there is arranged brackets 7 preventing too big outside matters such as big amounts of liquid or water or mechanical things to force through the ventilation openings 6 of the first frame 5 into the apparatus 1 and to damage the electronics 4 or other sensitive components. The bracket as well as the first frame can for example be made of a polymer or some metal. A breadth of the longitudinal ventilation opening 6 of the first frame 5 between two brackets 7 is at least 3 mm, more specifically at least 5 mm, even more specifically at least 7 mm and a length of such ventilation opening is at least 3 mm, more specifically at least 10 mm, even more specifically at least 20 mm. A breadth of the bracket 7 of the first frame 5 between two ventilation openings 6 may be at least equal compared to the breadth of the ventilation opening 6 of the first frame 5, more specifically 6 mm, even more specifically 10 mm.

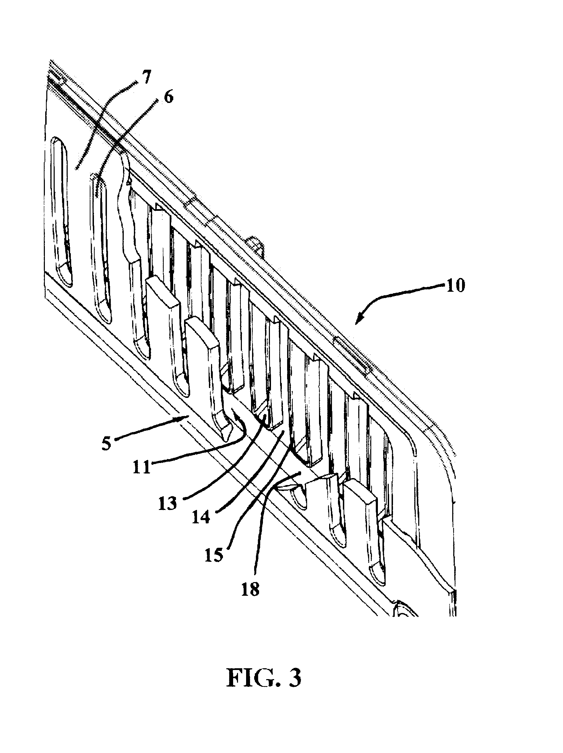

However, this structure does not alone prevent liquid drops or splashes entering the apparatus 1 and the electronics 4. Therefore a second frame 10 as shown in Figure 3 is arranged behind the first frame 5 in which case the second frame 10 is between the first frame 5 and the electronics 4 when considering the air flow direction heated by the electronics. In Figure 3 a partial section is used to show ventilation openings 13 of the second frame 10 which are not otherwise at least clearly visible in this angle of view outside the partial section. Between the second frame 10 and the first frame 5 there is a distance constituting an intermediate space 11 for exhaust air heated by the electronics 4 before entering outside the apparatus 1. The distance between the first frame 5 and the second frame 10 is at least 1,5 mm, more specifically more than 3 mm, even more specifically more than 5mm. The distance is calculated here from the inner surface of the first frame 5, which is towards the second frame 10, and an outer surface of the second frame 10, which is towards the first frame 5. The intermediate space 11 should allow the air flow between the first frame 5 and the second frame 10.

The second frame 10 comprises parallel longitudinal ventilation openings 13 being vertical or longitudinally inclined compared to vertical position from zero to 90 degrees, more specifically from zero to 45 degrees, even more specifically from zero to 30 degrees and separated by brackets 14 as shown in Figure 3. The inclination angle of the ventilation openings 6 and 13 may be equal or substantially equal in which case also the inclination angle of the first frame 5 with the brackets 7 and the second frame 10with the brackets 14 may follow each other. A breadth of the ventilation opening 13 of the second frame 10 is at least 3 mm, more specifically at least 5 mm, even more specifically at least 7 mm and a length of such ventilation opening 13 is more than 3 mm, more specifically at least 10 mm, even more specifically at least 20 mm. The air flow heated by the electronics 4 inside the apparatus 1 first goes through the ventilation openings 13 of the second frame 10 into the intermediate space 11 and therefrom through the ventilation openings 6 of the first frame 5 discharging the environment. Especially in Figure 4 there is shown using arrows how the airflow comes through the entrance port 3 of the lower part of the apparatus 1 and flows close to the electronics 4 up to the ventilation port 2 and through its ventilation openings of the second frame 10 and the intermediate space 11 and finally through the ventilation openings of the first frame 5 to the environment.

The ventilation openings 6 of the first frame 5 and the brackets 14 of the second frame 10 are overlapping which appears in Figure 3. Also the brackets 7 of the first frame 5 and the ventilation openings 13 of the second frame 10 are overlapping. Advantageously the ventilation openings 6 of the first frame 5 and the brackets 14 of the second frame 10 and correspondingly the brackets 7 of the first frame 5 and the ventilation openings 13 of the second frame 10 are one on the other or in other words facing each other leaving therebetween the intermediate space 11 forcing the air flow to make a bend while flowing from the ventilation openings 13 of the second frame 10 to the intermediate space 11 and further through the ventilation openings 6 of the first frame 5 towards the environment. A breadth of the bracket 14 of the second frame 10 between two adjacent ventilation openings 13 is at least equal compared to the breadth of the ventilation opening 13 of the second frame 10, more specifically 6 mm, even more specifically 10 mm.

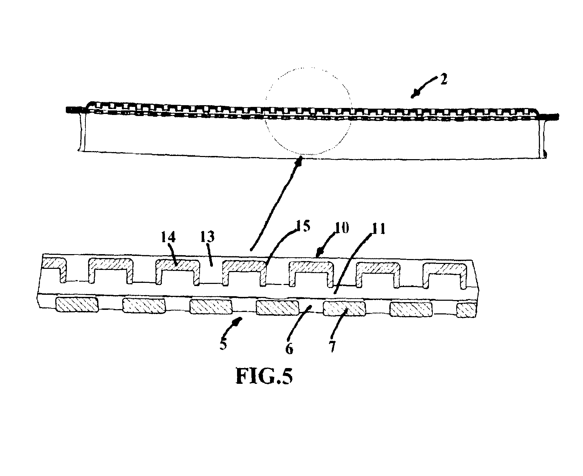

As shown in Figure 3 and 5 the bracket 14 of the second frame 10 may comprise a liquid guide 15 for keeping liquid away from the ventilation opening 13 of the second frame 10 edging the bracket 14 and possibly guiding the liquid down away from the ventilation opening 13. The liquid guide 15 can be a rise such as a collar surrounding the ventilation opening 13 or the longitudinal bracket 14 can be designed so that water aims to flow along the bracket 14 from its upper part towards its lower part preventing water going through the ventilation opening 13 into the apparatus 1 and getting to the electronics 4. Especially the longitudinal edges, which in some cases are also vertical edges, of the ventilation opening 13 may be equipped with the liquid guide 15, but also it is useful to equip a lower horizontal end of the ventilation opening 13 with the liquid guide 15. Typically the liquid guide design includes a rise in the surface of the bracket 14 in which case the distance between the inner surface of the first frame 5 and the liquid guide 15 can be determined from the rise of the liquid guide 15 of the second frame 10, which rise is towards the first frame 5, to be at least 1.5 mm, more specifically more than 3 mm, even more specifically more than 5mm.

The intermediate space 11 is connected to a draining channel 18 guiding possibly collected liquid outside the apparatus 1 as shown in Figure 4. The liquid may ran down along the brackets 14 of the second frame 10 towards the draining channel 18 keeping the ventilation openings 13 of the second frame 10 liquid-free in case the liquid from sources outside the apparatus 1 has reached the intermediate space 11 and the inner surface of the second frame 10.

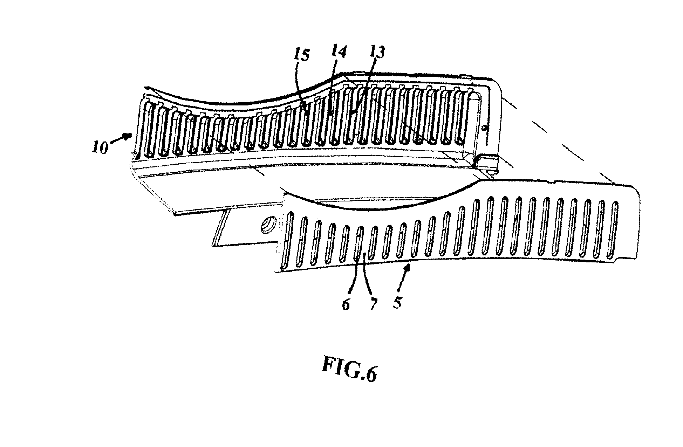

The first frame 5 and the second frame 10 can be detachable from each other and the apparatus 1 making cleaning as easy as possible. These detachable parts are shown in Figure 6. As well they can be joined together as an integral part e.g. by gluing or ultrasonic sealing or even the first frame and the second frame can be manufactured as a single component. It is advantageous to make also this integral part detachable from the apparatus, so that it can be cleaned e.g. under a water tap.

The ventilation port 2 comprising the first frame 5 and the second frame 10 as described hereinbefore may confirm the adequate ventilation of the apparatus 1 and avoid liquid entrance through the ventilation port inside the apparatus damaging the electronics 4. Thus this structure is very useful in environments where liquids like water is used near the apparatus such as the patient monitor. Also this kind of the ventilation port saves a space in the apparatus and it is simple and relatively cheap to manufacture. Further it can be easily implemented in different kind of solutions

The structure of the ventilation port 2 for the exhaust air as described above is useful also for the entrance port 3, even though it can be put in the lower part of the apparatus 1, which can be easier to protect from liquid drops or splashes. Further the bracket 7 of the first frame 5 may comprise the liquid guide 15 as described with the second frame 10 to minimize liquid entrance through the ventilation openings 6 to the intermediate space 11. Also it is possible to arrange more than two frames one after another. The breadth and the length of the ventilation opening 6 and the bracket 7 of the first frame 5 can be varied with respect to another ventilation opening or bracket of this same first frame. This is also the fact with the second frame 10 if only the brackets 7 of the first frame 5 are overlapping at least partly, but preferably in whole the ventilation opening 13 of the second frame 10. If the brackets 7 of the first frame 5 are only partly overlapping the ventilation openings 13 of the second frame 10 then it desirable to have at least one more frame with brackets and ventilation openings at a distance of the second frame 10 or the first frame 5, the bracket overlapping that part of the ventilation opening 13 which is exposed to direct liquid entrances outside the apparatus 1.

The written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects of the present invention are defined in the following numbered clauses:
1. A ventilation port for an apparatus having electronics producing heat when energized comprising:
   a first frame having several longitudinal ventilation openings separated by brackets and which ventilation openings are configured to allow an airflow for cooling said electronics; and
   a second frame having several longitudinal ventilation openings separated by brackets and which ventilation openings are configured to allow the airflow for cooling said electronics and which second frame and first frame are arranged consecutively leaving a distance therebetween and which ventilation openings of said first frame and the brackets of said second frame are overlapping.
2. The ventilation port according to clause 1, wherein said first frame and said second frame for an exhaust air are situated in upper part of the apparatus, which may be a patient monitor, whereupon the airflow cooling the electronics is configured first to flow through said ventilation openings of said second frame and after that through said ventilation openings of said first frame and which ventilation openings of said second frame and said first frame are longitudinal.
3. The ventilation port according to clause 1 or clause 2, wherein said first frame and said second frame are detachable.
4. The ventilation port according to any preceding clause, wherein said first frame and said second frame are joined together.
5. The ventilation port according to any preceding clause, wherein said bracket of said second frame is equipped with a liquid guide for keeping liquid away from said ventilation openings edging said bracket and possibly guiding the liquid down away from said ventilation openings.
6. The ventilation port according to clause 5, wherein said liquid guide is a collar towards said first frame surrounding said ventilation opening.
7. The ventilation port according to any preceding clause, wherein said distance between said first frame and said second frame is configured to constitute an intermediate space for an exhaust air heated by said electronics before entering outside said apparatus.
8. The ventilation port according to clause 7, wherein a lower part of said intermediate space is connected to a draining channel guiding possibly collected liquid outside said apparatus.
9. The ventilation port according to clause 7, wherein said distance between said first frame and said second frame is at least 1,5 mm, more specifically more than 3 mm, even more specifically more than 5mm.
10. The ventilation port according to any preceding clause, wherein a breadth of said ventilation opening of said first frame is at least 3 mm, more specifically at least 5 mm, even more specifically at least 7 mm and a length of such ventilation opening is at least 3 mm, more specifically at least 10 mm, even more specifically at least 20 mm.
11. The ventilation port according to any preceding clause, wherein a breadth of said ventilation opening of said second frame is at least 3 mm, more specifically at least 5 mm, even more specifically at least 7 mm and a length of such ventilation opening is more than 3 mm, more specifically at least 10 mm, even more specifically at least 20 mm.
12. The ventilation port according to any preceding clause, wherein a breadth of said bracket of said second frame is at least same as the breadth of said ventilation opening of said second frame, more specifically 6 mm, even more specifically 10 mm.
13. The ventilation port according to any preceding clause, wherein a breadth of said bracket of said first frame is at least equal compared to the breadth of said ventilation opening of said first frame, more specifically 6 mm, even more specifically 10 mm.
14. The ventilation port according to any preceding clause, wherein said ventilation openings of said first frame separated from each other by brackets are advantageously substantially vertical or may be longitudinally inclined compared to vertical position from zero to 90 degrees, more specifically from zero to 45 degrees, even more specifically from zero to 30 degrees.
15. The ventilation port according to any preceding clause, wherein said ventilation openings of said second frame separated from each other by brackets are advantageously substantially vertical or may be longitudinally inclined compared to vertical position from zero to 90 degrees, more specifically from zero to 45 degrees, even more specifically from zero to 30 degrees.
16. A ventilation port for an apparatus having electronics producing heat when energized comprising:
   a first frame having several longitudinal ventilation openings separated by brackets and which ventilation openings are configured to allow an airflow for cooling said electronics; and
   a second frame having several longitudinal ventilation openings separated by brackets equipped with a liquid guide for keeping a liquid away from said ventilation openings edging said bracket and guiding the liquid down away from said ventilation openings and which ventilation openings are configured to allow the airflow for cooling said electronics and which second frame and first frame are arranged consecutively leaving a distance therebetween so that the airflow is configured first to flow through said ventilation openings of said second frame and after that through said ventilation openings of said first frame and which ventilation openings of said first frame and the brackets of said second frame are overlapping.
17. The ventilation port according to clause 16, wherein said distance between said first frame and said second frame is at least 1,5 mm, more specifically more than 3 mm, even more specifically more than 5mm.
18. The ventilation port according to clause 16 or clause 17, wherein said longitudinal ventilation openings of said second frame separated from each other by brackets are advantageously substantially vertical or may be longitudinally inclined compared to vertical position from zero to 90 degrees, more specifically from zero to 45 degrees, even more specifically from zero to 30 degrees.
19. A ventilation port for an apparatus having electronics producing heat when energized comprising:
   a first frame having several longitudinal ventilation openings separated by brackets and which ventilation openings are configured to allow an airflow for cooling said electronics; and
   a second frame having several longitudinal ventilation openings separated by brackets equipped with a liquid guide for keeping liquid away from said ventilation openings edging said bracket and possibly guiding the liquid down away from said ventilation openings and which ventilation openings are configured to allow the airflow for cooling said electronics and which second frame and first frame are arranged consecutively leaving a distance therebetween constituting an intermediate space for an exhaust air and which intermediate space is connected to a draining channel guiding possibly collected liquid outside said apparatus and which ventilation openings of said first frame and the brackets of said second frame are overlapping.
20. The ventilation port according to clause 19, wherein said liquid guide is a collar towards said first frame surrounding said ventilation opening.

## Claims

1. A ventilation port for an apparatus (1) having electronics (4) producing heat when energized comprising:
a first frame (5) having several longitudinal ventilation openings (6) separated by brackets (7) and which ventilation openings are configured to allow an airflow for cooling said electronics (4),
**characterized in that** said ventilation port also comprising:
a second frame (10) having several longitudinal ventilation openings (!3) separated by brackets (14) and which ventilation openings (13) are configured to allow the airflow for cooling said electronics (4) and which second frame and first frame are arranged consecutively leaving a distance therebetween and which ventilation openings (6) of said first frame (5) and the brackets (14) of said second frame (10) are overlapping.

2. The ventilation port according to claim 1, **characterized in that** said first frame (5) and said second frame (10) for an exhaust air are situated in upper pant of the apparatus (1), which may be a patient monitor, whereupon the airflow cooling the electronics (4) is configured first to flow through said ventilation openings (13) of said second frame (10) and after that through said ventilation openings (6) of said first frame (5) and which ventilation openings of said second frame and said first frame are longitudinal.

3. The ventilation port according to claim 1 or claim 2, **characterized in that** said first frame (5) and said second frame (10) are detachable.

4. The ventilation port according to any preceding claim, **characterized in that** said first frame (5) and said second frame (10) are joined together.

5. The ventilation port according to any preceding claim, **characterized in that** said bracket (14) of said second frame (10) is equipped with a liquid guide (15) for keeping liquid away from said ventilation openings (13) edging said bracket (14) and possibly guiding the liquid down away from said ventilation openings (13).

6. The ventilation port according to claim 5, **characterized in that** said liquid guide (15) is a collar towards said first frame (5) surrounding said ventilation opening (13).

7. The ventilation port according to any preceding claim, **characterized in that** said distance between said first frame (5) and said second frame (10) is configured to constitute an intermediate space (11) for an exhaust air heated by said electronics (4) before entering outside said apparatus (1).

8. The ventilation port according to claim 7, **characterized in that** a lower part of said intermediate space (11) is connected to a draining channel (18) guiding possibly collected liquid outside said apparatus.

9. The ventilation port according to claim 7, **characterized in that** said distance between said first frame (5) and said second frame (10) is at least 1,5 mm, more specifically more than 3 mm, even more specifically more than 5mm.

10. The ventilation port according to any preceding claim, **characterized in that** a breadth of said ventilation opening (6) of said first frame (5) is at least 3 mm, more specifically at least 5 mm, even more specifically at least 7 mm and a length of such ventilation opening (6) is at least 3 mm, more specifically at least 10 mm, even more specifically at least 20 mm.

11. The ventilation port according to any preceding claim, **characterized in that** a breadth of said ventilation opening (13) of said second frame (10) is at least 3 mm, more specifically at least 5 mm, even more specifically at least 7 mm and a length of such ventilation opening (13) is more than 3 mm, more specifically at least 10 mm, even more specifically at least 20 mm.

12. The ventilation port according to any preceding claim, **characterized in that** a breadth of said bracket (14) of said second frame (10) is at least same as the breadth of said ventilation opening (13) of said second frame (10), more specifically 6 mm, even more specifically 10 mm.

13. The ventilation port according to any preceding claim, **characterized in that** a breadth of said bracket (7) of said first frame (5) is at least equal compared to the breadth of said ventilation opening (6) of said first frame (5), more specifically 6 mm, even more specifically 10 mm.

14. The ventilation port according to any preceding claim, **characterised in that** said ventilation openings (6) of said first frame (5) separated from each other by brackets (7) are advantageously substantially vertical or may be longitudinally inclined compared to vertical position from zero to 90 degrees, more specifically from zero to 45 degrees, even more specifically from zero to 30 degrees.

15. The ventilation port according to any preceding claim, **characterized in that** said ventilation openings (13) of said second frame (10) separated from each other by brackets (14) are advantageously substantially vertical or may be longitudinally inclined compared to vertical position from zero to 90 degrees, more specifically from zero to 45 degrees, even more specifically from zero to 30 degrees.
